# EUROPÄISCHE PATENTSCHRIFT

(11) **EP 3 023 689 B1**
(45) Veröffentlichungstag und Bekanntmachung des Hinweises auf die Patenterteilung: **03.08.2022**
(21) Anmeldenummer: 15003329.8
(22) Anmeldetag: 23.11.2015
(51) Int. Cl.: F21V 5/00, F21V 5/08, F21V 7/00, F21V 13/04, G02B 5/04, G02B 19/00, F21Y 105/10, F21Y 115/10

(54) **LEUCHTVORRICHTUNG**
LIGHTING DEVICE
DISPOSITIF D'ÉCLAIRAGE

(30) Priorität: 21.11.2014 DE 102014017295
(43) Veröffentlichungstag der Anmeldung: 25.05.2016
(73) Patentinhaber: SITECO GmbH, 83301 Traunreut (DE)
(72) Erfinder: Lukanow, Stephan, 82152 Krailling (DE)
(74) Vertreter: Schohe, Stefan

(56) Entgegenhaltungen:
- DE-A1-102013 106 158
- DE-U1- 20 200 571
- US-A1- 2008 043 466
- US-A1- 2011 063 857
- US-A1- 2012 307 495
- US-A1- 2013 223 081

## Beschreibung

Die Erfindung betrifft eine Leuchtvorrichtung mit einer oder mehreren LED und einer der oder den LED nachgeschalteten lichtlenkenden Anordnung, welche das von der LED abgegebene Licht empfängt und entsprechend einer gewünschten Lichtstärkeverteilung umlenkt. Die Erfindung betrifft ferner eine zugehörige Leuchte und eine lichtlenkende Anordnung für solche Leuchtvorrichtungen sowie ein Verfahren zu ihrer Herstellung. Leuchtvorrichtungen der eingangs genannten Art werden insbesondere in Außenleuchten verwendet, die LED als Lichtquellen haben. Ein besonderes Anwendungsgebiet der Erfindung ist die Beleuchtung von Sportstätten.

Leuchten mit LED als Lichtquellen weisen regelmäßig mehrere LED auf und haben daher im Gegensatz zu Leuchten mit konventionellen Lichtquellen mehrere, häufig viele Einzellichtquellen, deren Licht im Sinne einer gewünschten Lichtstärkeverteilung umgelenkt werden muss. Hierfür ist es bekannt, den LED insgesamt, ähnlich wie bei konventionellen Leuchten, eine Optik zuzuordnen, die das von den LED insgesamt empfangene Licht entsprechend umlenkt. Nachteilig ist hierbei, dass die LED diskrete Lichtquellen darstellen und sich dies, wenn nicht zusätzliche Vorkehrungen getroffen werden, auch in der Beleuchtung des betreffenden Raumbereichs widerspiegelt. Dementsprechend wird bei modernen LED-Leuchten häufig einzelnen LED oder einer Gruppe von LED, welche nur ein Teil der gesamten LED der Leuchte darstellen und beispielsweise als LED-Module implementiert sein können, jeweils eine individuelle Optik zugeordnet, welche einerseits gewährleistet, dass das von der LED bzw. Gruppe von LED abgegebene Licht im Sinne einer gewünschten Lichtstärkeverteilung abgegeben wird und andererseits das Licht verschiedener LED bzw. Gruppen von LED so gelenkt wird, dass eine gleichmäßige Beleuchtung entsteht. Hierbei kann es wieder vorgesehen sein, sämtliche optische Einheiten, die jeweils einer LED bzw. einer Gruppe von LED zugeordnet sind, in einem einzigen Bauteil zu implementieren, das durch ein geeignetes Formverfahren, z. B. im Spritzgussverfahren, hergestellt wird. Nachteilig ist dabei, dass auch dann, wenn eine standardisierte Anordnung der Lichtquellen verwendet wird, die verwendete Form speziell an die gewünschte Lichtstärkeverteilung angepasst sein muss, um die erforderlichen optischen Elemente zu formen. Dementsprechend ist die Umstellung auf eine andere Lichtstärkeverteilung aufwendig. Dies ist nachteilig, wenn eine Leuchte mit unterschiedlichen Lichtstärkeverteilungen angeboten werden soll, oder wenn verschiedene Leuchten in einer standardisierten Bauweise hergestellt werden sollen, bei der eine möglichst große Zahl von gleichen Bauteilen verwendet wird, die dementsprechend in größeren Stückzahlen und damit auch kostengünstiger hergestellt werden können.

DE 202 00 571 U1 offenbart eine Fahrzeugleuchte, insbesondere Seitenblinkleuchte für Kraftfahrzeuge, mit einem becherförmigen Gehäuse, das eine dem Gehäuseboden gegenüberliegende Lichtaustrittsöffnung aufweist und für den Einbau in eine Karosserieöffnung eines Fahrzeuges ausgebildet ist, mit einer Lichtaustrittsscheibe, welche die Lichtaustrittsöffnung überdeckt und das Gehäuse nach außen hin verschließt, und mit wenigstens einer Leuchtdiode, die im Inneren des Gehäuses angeordnet ist und deren Licht nach außen zumindest teilweise unter einem bezüglich der sich vom Gehäuseboden zur Lichtaustrittsöffnung erstreckenden Gehäusehauptachse großen Winkel abgegeben wird, wobei vor der Leuchtdiode ein prismatisches Element so angeordnet ist, dass das von der Leuchtdiode abgegebene Lichtbündel durch eine erste Grenzfläche in das prismatisches Element eintritt und an einer gegen die Zentralachse des Lichtbündels geneigten zweiten Grenzfläche des prismatischen Elementes zumindest teilweise so reflektiert wird, dass der reflektierte Teil durch eine dritte Grenzfläche des prismatischen Elementes aus diesem austritt.

DE 10 203 106 158 A1 beschreibt eine Linsenvorrichtung mit einer Lichteintrittsseite, auf welcher von einer zugeordneten LED Licht in den Linsenkörper eingestrahlt werden kann, und einer Lichtaustrittsseite, an der das Licht aus dem Linsenkörper austritt, wobei an der Lichtaustrittsseite eine Brechungsfläche vorgesehen ist, die aus einem kuppelförmigen ersten Teil und einem daran unmittelbar angrenzenden, im wesentlichen ebenen zweiten Teil besteht, der zu dem ersten Teil abwinkelt ist. Auf der dem ersten Teil der Brechungsfläche gegenüberliegenden Seite des zweiten Teils schließt an diesen eine konvexe Reflexionsfläche unter einem spitzen Winkel an. welche das auf sie einfallendes Licht vollständig in der Linsenkörper zurückreflektiert. Ein Teil des von der LED emittierten Lichts tritt über die Brechungsfläche direkt aus, während der restliche Teil des Lichts an der Reflexionsfläche in eine gewünschte Beleuchtungszone zurückreflektiert wird. Weiterer Stand der Technik ist bekannt aus US 2008/0043466 A1, US 2011/0063857 A1, US 2013/0223081 A1 und US 2012/0307495 A1.

Die Aufgabe der Erfindung besteht darin, eine optische Anordnung zum Lenken des Lichts einer oder mehrerer LED sowie eine entsprechende Leuchtvorrichtung zur Verfügung zu stellen, die sich in einer stärker standardisierten Bauweise realisieren lässt.

Erfindungsgemäß wird diese Aufgabe durch eine Leuchtanordnung, insbesondere Leuchtmodul, nach Anspruch 5 mit einer oder mehreren LED und mit einer lichtlenkenden Anordnung, insbesondere optisches Modul, nach Anspruch 1 mit einer oder mehreren optischen Einheiten, die jeweils einer LED oder einer Gruppe von LED zugeordnet sind, sowie eine Leuchte nach Anspruch 7 gelöst.

Die Erfindung stellt eine Leuchtanordnung zur Verfügung, bei der die lichtlenkende Grenzfläche des ersten Abschnitts eine Ablenkcharakteristik besitzt, die von derjenigen einer glatten ebenen Fläche verschieden ist. Die Elemente oder Charakteristika, welche diese abweichende Ablenkcharakteristik erzeugen, müssen nicht notwendigerweise auf der gesamten Grenzfläche vorgesehen sein.

Der erste lichtlenkende Abschnitt, in dem das Licht reflektiert wird, wird zur Modifizierung einer Standardlichtabstrahlcharakteristik, die durch die Grenzfläche des zweiten Abschnitts generiert wird, verwendet. Dieser erste lichtlenkende Abschnitt kann dazu verwendet werden, um Licht, das in eine für die Beleuchtung unerwünschte Richtung läuft, in eine gewünschte Richtung umzulenken.

In Ausführungsformen der Erfindung lassen sich durch die Kombination eines reflektierenden (ersten) Abschnitts und eines linsenartigen (zweiten) Abschnitts in der optischen Einheit die Vorteile der jeweiligen Art der Lichtlenkung kombinieren und optische und/oder herstellungstechnische Nachteile der jeweiligen Lichtlenkungsart kompensieren. Insbesondere kann der reflektierende erste Abschnitt dazu eingesetzt werden, um die Richtungsverteilung des auf die Grenzfläche des zweiten Abschnitts einfallenden Lichts zu optimieren und/oder um in Winkelbereichen, in denen sich die gewünschte Lichtstärkeverteilung durch eine entsprechende Gestaltung der Grenzfläche des zweiten Abschnitts nicht oder nicht in einfacher oder zufriedenstellender Weise erreichen lässt, die Lichtstärkeverteilung durch Reflexion in dem ersten Abschnitt entsprechend zu beeinflussen.

LED im Sinne des Patents umfassen insbesondere auch organische Leuchtdioden (organic light emitting diodes (OLED)) und sind nicht auf anorganische Leuchtdioden beschränkt.

Eine optische Einheit wie vorangehend beschrieben kann aus mehreren Bestandteilen bestehen, insbesondere mehreren optischen Bauteilen wie Linsen, Prismen, lichtleitenden Körpern und dgl.. In einer bevorzugten Ausführungsform sind zumindest der erste und zweite lichtlenkende Abschnitt einstückig miteinander ausgebildet, wobei die optische Einheit insgesamt einstückig ausgebildet sein und ihrerseits wiederum einen Teil eines einstückigen Bauteils bilden kann. Als Herstellungsverfahren eignet sich insbesondere ein Spritzgussverfahren. Als Material kommen dabei vor allem Kunststoffe, insbesondere Thermoplaste, in Betracht. Geeignete Kunststoffe sind z.B. Polycarbonat (PC) oder Polymethylmethacrylat (PMMA).

Es kann vorgesehen sein, dass eine oder mehrere, vorzugsweise alle optischen Einheiten gegenüber der ihr zugeordneten LED oder Gruppe von LED derart angeordnet sind, dass das von der LED oder Gruppe von LED abgegebene Licht im Wesentlichen oder vollständig auf die ihr zugeordnete optische Einheit einfällt. In einer bevorzugten Ausführungsform ist die lichtlenkende Anordnung derart ausgebildet, dass das Licht von einer LED oder Gruppe von LED, die einer bestimmten optischen Einheit zugeordnet sind, ausschließlich über diese optische Einheit abgegeben wird.

Es kann insbesondere vorgesehen sein, dass die LED oder die Gruppe von LED in einem Hohlraum eines lichtlenkenden Körpers, der die lichtlenkende Einheit oder einen Teil davon bildet, angeordnet ist, so dass ihr Licht vollständig auf die Wände dieses Hohlraums einfällt. Eine oder mehrere Wände des Hohlraums können dabei gekrümmt oder anderweitig so ausgestaltet sein, dass sie wie eine Linse wirken.

Die Grenzfläche des zweiten lichtlenkenden Abschnitts kann rotationssymmetrisch, insbesondere kreissymmetrisch ausgebildet sein. Die Grenzfläche kann aber auch die Form eines Polygons aufweisen, z.B. die Form eines Dreiecks, Rechtecks, Quadrats, Sechsecks oder Achtecks.

Die Grenzfläche des zweiten lichtlenkenden Abschnitts kann als glatte, nicht ebene Freiformfläche ausgebildet sein.

Die Erfindung kann vorsehen, dass das durch den zweiten Abschnitt hindurchtretende Licht in dem zweiten lichtlenkenden Abschnitt nicht reflektiert wird.

Der zweite lichtlenkende Abschnitt erzeugt eine asymmetrische Lichtverteilung. Die Grenzfläche des zweiten lichtlenkenden Abschnitts kann insbesondere eine rechteckige Lichtverteilung generieren, Rechteckförmige Lichtverteilungen des über die optischen Einheiten abgegebenen Lichts sind für Leuchten vorteilhaft, bei denen ein größerer Raum- oder Geländeabschnitt ausgeleuchtet werden soll, da sich mehrere, z.B. von unterschiedlichen LED oder Gruppen von LED erzeugte rechteckförmige beleuchtete Bereiche zwischenraumfrei zu einem größeren beleuchteten Bereich zusammenfügen lassen, so dass durch die entsprechende Lenkung des von verschiedenen optischen Einheiten abgestrahlten Lichts, die jeweils einer LED oder Gruppe von LED zugeordnet sind, auch größere Bereiche gleichförmig beleuchtet werden können.

Es kann vorgesehen sein, dass der erste Abschnitt den zweiten Abschnitt teilweise umgibt und derart angeordnet und ausgebildet ist, dass ein Teil des in dem ersten Abschnitt laufenden Lichts in den zweiten Abschnitt eintritt und ein weiterer Teil über die besagte Grenzfläche, die einen Teil der Lichtaustrittsfläche der optischen Einheit bildet, abgegeben wird.

Diese Grenzfläche des ersten lichtlenkenden Abschnitts ist ganz oder abschnittsweise strukturiert, d.h. sie bildet insgesamt oder in dem betreffenden Abschnitt keine glatte Fläche. Die Elemente oder Charakteristika, welche diese Ablenkcharakteristik der Grenzfläche des ersten lichtlenkenden Abschnitts erzeugen müssen ebenfalls nicht notwendigerweise auf der gesamten Grenzfläche vorgesehen sein.

In einer bevorzugen Ausführungsform ist die gesamte lichtlenkende Anordnung einstückig ausgebildet.

Die Anordnung kann dabei insbesondere mit einer Einrichtung zum Verbinden mit einem Leuchtengehäuse versehen sein.

Die Erfindung kann bei einer einstückigen Ausbildung der lichtlenkenden Anordnung vorsehen, dass die lichtlenkende Anordnung die Form einer Platte aufweist, auf deren einer Hauptseite, welche die Lichtaustrittsseite bildet, die lichtlenkende Grenzfläche des oder der zweiten lichtlenkenden Abschnitte ein- oder angeformt ist oder der oder die zweiten lichtlenkenden Abschnitte insgesamt ein- oder angeformt sind.

Unter den Hauptseiten der Platte sind die beiden Flächen quer oder senkrecht zu der Richtung der Dicke zu verstehen, die durch die Schmalseiten der Platte verbunden sind. Die Platte kann als Grundform, die durch die ersten lichtlenkenden Abschnitte und die zweiten lichtlenkenden Abschnitte bzw. deren Grenzflächen ggf. modifiziert ist, die Form einer planparallelen Platte haben. Andere Grundformen der Platte, z.B. solche, bei denen die Dicke räumlich variiert, sind jedoch ebenfalls möglich.

In einer bevorzugten Ausführungsform sind die ersten und zweiten lichtlenkenden Abschnitte so eingerichtet, dass kein oder nur wenig Licht in die Bereiche der Platte eintritt, welche Zwischenräume zwischen den optischen Einheiten bilden. Gegebenenfalls können seitliche Begrenzungen, welche den Eintritt von Licht in diese Zwischenräume be- oder verhindern, vorgesehen sein.

Es kann vorgesehen sein, dass die Grenzfläche des zweiten Abschnitts ganz oder teilweise mit einer Streustruktur versehen ist.

Es kann auch vorgesehen sein, dass die Grenzfläche mattiert ganz oder teilweise mattiert ist, so dass das hindurchtretende Licht diffus strahlend abgegeben wird.

Es kann vorgesehen sein, dass die lichtlenkende Anordnung mehrere optische Einheiten in einer regelmäßigen Anordnung, insbesondere in einer Anordnung in Reihen und/oder Spalten aufweist. In einer konkreten Ausführungsform sind z.B. 4 x 4 Linsen als optische Einheiten in regelmäßigen Reihen und Spalten jeweils à 4 Linsen angeordnet

Erfindungsgemäß kann vorgesehen sein, dass die lichtlenkende Anordnung mehrere optische Einheiten aufweist, wobei der erste lichtlenkende Abschnitt und/oder der zweite lichtlenkende Abschnitt mehrerer, vorzugsweise aller dieser optischen Einheiten identisch ausgebildet ist.

Die Erfindung kann dabei vorsehen, dass der erste lichtlenkende Abschnitt und/oder der zweite lichtlenkende Abschnitt mehrerer, vorzugsweise aller lichtlenkenden Einheiten gleich orientiert sind, d.h. korrespondierende Elemente dieser Abschnitte weisen in dieselbe Richtung.

Die Erfindung stellt auch eine lichtlenkende Anordnung, insbesondere ein optisches Modul, mit einer oder mehreren optischen Einheiten, die jeweils einer LED oder einer Gruppe von LED zugeordnet werden können, gemäß Anspruch 1 zur Verfügung.

Diese lichtlenkende Anordnung kann in der gleichen Weise ausgebildet sein, wie dies vorangehend im Zusammenhang mit einer Leuchtanordnung, die eine solche lichtlenkende Anordnung enthält, beschrieben wurde.

Die Erfindung stellt auch eine Leuchte mit einer oder mehreren Leuchtanordnungen, insbesondere Leuchtmodulen, gemäß Anspruch 7, zur Verfügung.

Die Leuchtanordnung oder die Leuchtanordnungen sind dabei vorzugsweise in einem Gehäuse untergebracht. Mehrere Leuchtanordnungen bzw. Module können in einem gemeinsamen Gehäuse oder, einzeln oder gruppenweise, in mehreren Gehäuseeinheiten angeordnet sein.

Die Erfindung stellt auch ein Formwerkzeug nach Anspruch 8 zur Verfügung.

Mit einem solchen Formwerkzeug ist es möglich, entsprechende optische Anordnungen mit vergleichsweise geringem Aufwand herzustellen oder zu modifizieren, indem immer das erste Formteil, welches den oder die ersten Abschnitte festlegt, verwendet wird, und für die spezielle, für die konkret herzustellende Anordnung gewünschte Lichtabstrahlcharakteristik eine entsprechend gestaltete Grenzfläche durch das zweite Formteil erzeugt wird, das speziell für diese spezielle Lichtabstrahlcharakteristik bzw. für diese spezielle Grenzfläche gefertigt wird. Um eine entsprechende lichtlenkende Anordnung bzw. eine entsprechende Leuchtanordnung herzustellen, muss dann nicht das gesamte Werkzeug, sondern nur ein Teil davon neu hergestellt werden.

Die Erfindung stellt auch ein Verfahren nach Anspruch 9 zur Herstellung verschiedener lichtlenkender Anordnungen, wie vorangehend beschrieben, bzw. zur Verwendung in einer Leuchtanordnung, wie vorangehend beschrieben, mittels besagter Formwerkzeuge zur Verfügung, wobei für die Herstellung jeder Anordnung jeweils dasselbe erste Formteil verwendet wird, welches die ersten Abschnitte eines oder mehrerer der besagten optischen Einheiten, vorzugsweise aller optischen Einheiten definiert, und ein jeweils für die jeweilige Anordnung spezifisches zweites Formteil verwendet wird, welches die besagte Grenzfläche der zweiten Abschnitte eines oder mehrerer der besagten optischen Einheiten, vorzugsweise aller optischen Einheiten definiert.

Nachfolgend werden anhand der beigefügten Zeichnungen Ausführungsbeispiele der Erfindung (Fig. 1 und 2) sowie andere, nicht-erfindungsgemäße optische Anordnungen (Fig. 3 bis 8), die Merkmale enthalten, die für Ausführungsformen der anspruchsgemäßen Vorrichtungen relevant sein können, beschrieben.

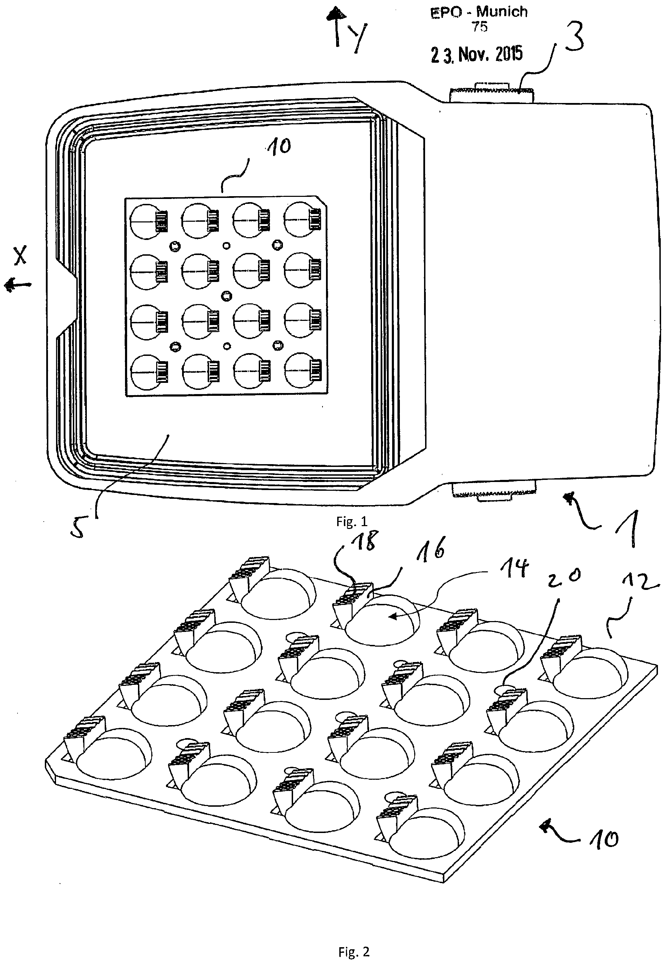

- Fig. 1: zeigt eine Leuchte mit einer Ausführungsform einer Leuchtanordnung einer optischen Anordnung gemäß der Erfindung,
- Fig. 2: zeigt die optische Anordnung in der Ausführungsform nach Fig. 1,

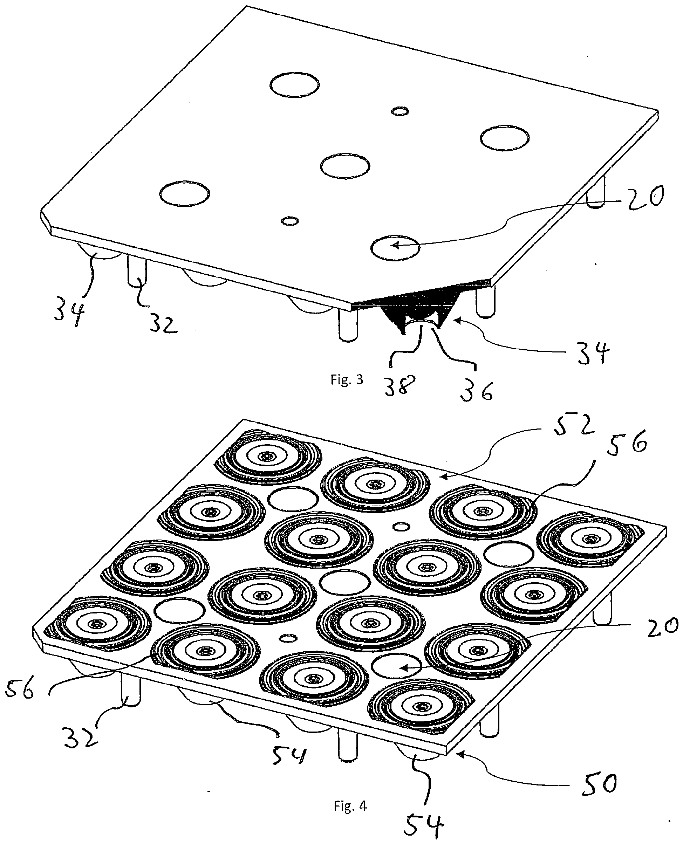

- Fig. 3: zeigt eine Ausführungsform einer lichtlenkenden Anordnung (nicht gemäß der Erfindung)
- Fig. 4: zeigt eine Ausfiihrungsform einer optischen Anordnung mit einer Wellenstruktur der optischen Einheiten (nicht gemäß der Erfindung)

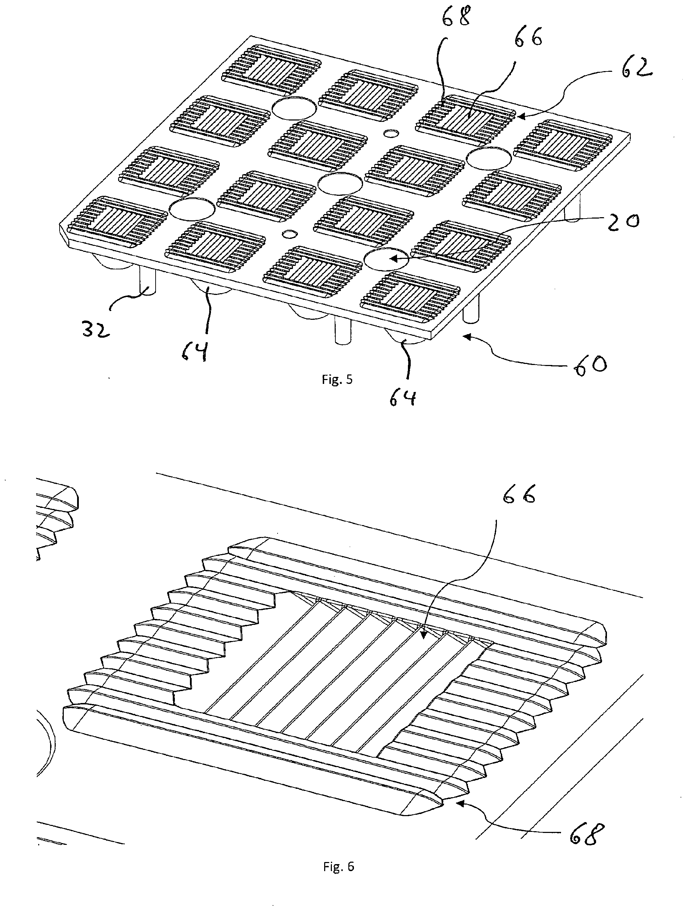

- Fig. 5: zeigt eine Ausführungsform einer optischen Anordnung, bei welcher die Lichtaustrittsfläche der optischen Einheiten mit einer Prismenstruktur versehen ist (nicht gemäß der Erfindung)
- Fig. 6: zeigt die Prismenstruktur der Lichtaustrittsflächen der optischen Einheiten gemäß Fig. 5 in einer Detailansicht,

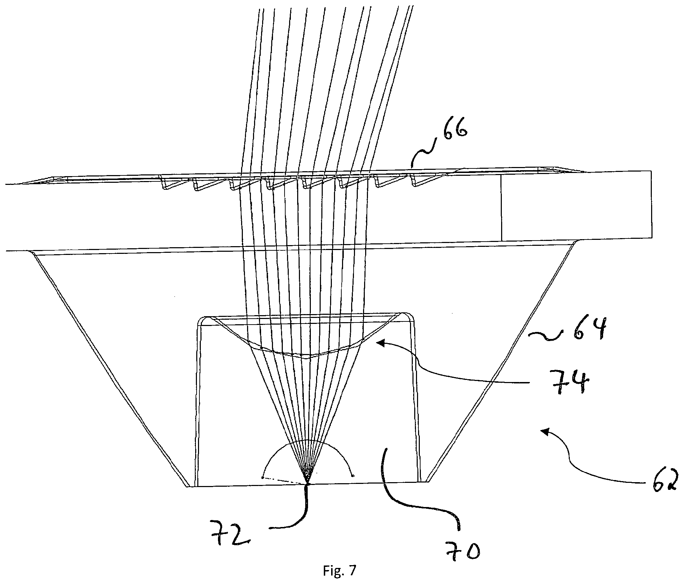

- Fig. 7: zeigt schematisch den Strahlengang bei der Anordnung der Fig. 5 und 6 im Bereich der asymmetrischen Prismen der Prismenstruktur,

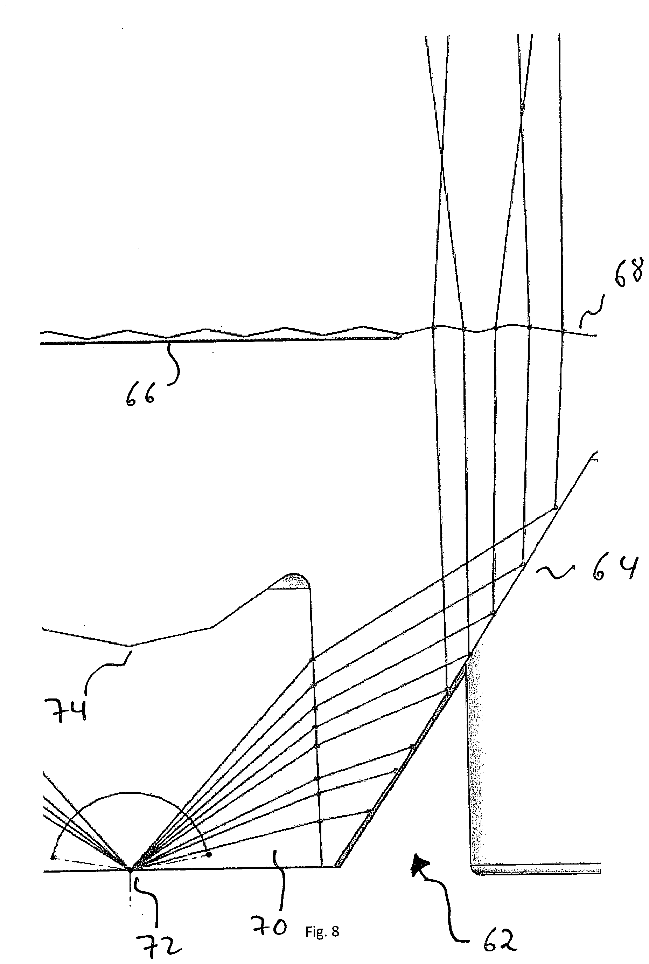

- Fig. 8: zeigt schematisch den Strahlengang bei der Anordnung der Fig. 5 und 6 im Bereich der symmetrischen Prismen der Prismenstruktur.

Fig. 1 und 2 zeigen ein Ausführungsbeispiel einer erfindungsgemäßen Leuchte, wobei Fig. 2 die Optik der Leuchtanordnung im Detail zeigt. Die Leuchte der Fig. 1 ist als Außenleuchte konzipiert und ist hinsichtlich der Optik dafür ausgelegt, dass das Licht mehrheitlich in die Richtung von der Befestigungsstelle weg, also in der Darstellung der Fig. 1 nach links, in Richtung des Pfeils X, und in der Richtung senkrecht dazu (in der Darstellung in Fig. 1 in vertikaler Richtung, in beide Richtungen entlang der durch den Pfeil Y bezeichneten Achse) abgegeben wird, wie dies zum Beispiel für die Straßenbeleuchtung oder für die Beleuchtung von Sportstätten, z.B. durch Fluter, gefordert wird.

Genauer weist die Leuchte ein Gehäuse 1 auf, das über eine geeignete Befestigung 3 an einem Träger, beispielsweise einem Leuchtenmast, montiert ist. Das Leuchtengehäuse weist ein Lichtaustrittsfenster 5 auf, durch welches über ein optisches Modul 10 das Licht von LEDs, die als Lichtquelle dienen, abgegeben wird.

Das in Fig. 2 im Detail gezeigte optische Modul 10 bildet eine optische Anordnung, die einstückig aus einem geeigneten Kunststoff, zum Beispiel PC oder PMMA, mittels eines geeignetes Herstellungsverfahrens, zum Beispiel eines Spritzgussverfahrens, hergestellt ist. Es weist in einer 4x4-Anordnung 16 optische Einheiten 12 auf. Diese sind integral in dem optischen Modul 10 ausgebildet und jeweils einer LED oder einer Gruppe von LED (nicht dargestellt) zugeordnet. Eine solche Gruppe von LED kann beispielsweise durch ein LED-Modul gebildet werden. Jede optische Einheit 12 weist eine Freiformlinse 14 und einen Umlenkkörper 16 auf, über welche das von den zugeordneten LED abgegebene Licht abgestrahlt wird. Dabei erzeugen die Freiformlinsen 14 eine asymmetrische Lichtstärkeverteilung. Der Umlenkkörper 16 weist auf der zu der Befestigung 3 der Leuchte hin weisenden Seite (in Fig. 2 auf der linken Seite) eine gekrümmte Fläche auf, an der das in den Umlenkkörper 16 eingetretene Licht der LED durch Totalreflexion reflektiert wird. Dadurch wird dasjenige Licht, welches in die Richtung der Leuchtenbefestigung 3 von der bzw. den LED abgestrahlt wird, derart umgelenkt, dass es senkrecht nach unten oder in die entgegengesetzte Richtung, das heißt zum freien Ende der Leuchte 1 hin, in Richtung des Pfeils X in Fig. 1, läuft. Um das Licht über einen größeren Bereich in einer Richtung senkrecht zu der Richtung X (das heißt entlang der Y-Achse in Fig. 1) abzugeben, ist die Oberseite der Umlenkkörper 16 mit einer Prismenstruktur 18 versehen, die in beide Richtungen parallel zu der Y-Achse eine breitstrahlende Lichtstrahlverteilung erzeugt, sodass das von den lichtlenkenden Körpern 16 abgegebene Licht auf beiden Seiten der Leuchte breitstrahlend senkrecht zu der Richtung X abgegeben wird.

Zur Befestigung des optischen Moduls 10 an dem Leuchtengehäuse 1 beziehungsweise an einer in dem Leuchtengehäuse 1 angebrachten Platine (nicht dargestellt), welche die LED trägt, ist das optische Modul 10 mit Durchgangsbohrungen 20 versehen. Die mechanischen Verbindungen und Schnittstellen sind in dieser Ausführungsformen der Erfindung und allen nachfolgend beschriebenen optischen Anordnungen gleich und werden im Montageprozess gleich behandelt. Die Geometrie des Moduls 10 kann dabei so ausgelegt sein, dass eine Drehbarkeit des Moduls in der Leuchte möglich ist, vorzugsweise um 90 Grad. Hinsichtlich weiterer Einzelheiten der mechanischen Eigenschaften des optischen Moduls 10 und dessen Verbindung mit dem Leuchtengehäuse 1 beziehungsweise einer Platine wird auf die deutsche Patentanmeldung 10 2014 116 565.9 der Anmelderin, eingereicht am 12. November 2014, verwiesen, die den Aufbau und die Verbindung eines solchen optischen Moduls im Einzelnen beschreibt.

Fig. 3 zeigt zur Veranschaulichung bestimmter Aspekte der Erfindung ein optisches Modul für eine Leuchtanordnung, das nicht alle Merkmale des Anspruchs 1 aufweist, wobei Elemente mit gleichen Bezugszeichen die gleichen wie in Fig. 2 sind. Hinsichtlich der mechanischen Verbindung des mit 30 bezeichneten Moduls erkennt man zunächst Füße 32, welche zum formschlüssigen Zusammenwirken mit entsprechenden Elementen der Platine und/oder des Leuchtengehäuses vorgesehen sind, sodass das optische Modul 3 bezüglich der Platine und/oder des Leuchtengehäuses präzise positioniert ist. Auch hier weist das optische Modul 30 wieder eine 4x4-Anordnung von 16 optischen Einheiten auf, die jeweils einer LED oder einer Gruppe von LED zugeordnet sind und das von diesen abgegebene Licht aufnehmen und umlenken, so dass es über eine Lichtaustrittsseite der optischen Einheiten auf der Oberseite des Moduls 30 abgegeben wird. Diese optischen Einheiten weisen jeweils einen für alle Einheiten identisch ausgebildeten ersten, kegelstumpfförmigen Abschnitt 34 aus einem transparenten Material auf, der an seiner Unterseite einen Hohlraum 36 zur Aufnahme der LED beziehungsweise Gruppe von LED aufweist. Der kegelstumpfförmige Abschnitt 34 besitzt einen geschlossenen Mantel, der jedoch zum Zwecke der Illustration und zur Verdeutlichung des Hohlraums 36 in Fig.3 teilweise ausgeschnitten dargestellt ist. Auf der der LED beziehungsweise der Gruppe von LED gegenüberstehenden Seite des Hohlraums 36 ist die Wand dieses Hohlraums mit einer linsenförmigen Auswölbung 38 versehen, um das auf diese Fläche einfallende Licht nach Art einer Linse umzulenken. Die Mantelfläche des Kegelstumpfs 34 ist so ausgebildet und orientiert, dass das von der beziehungsweise den LED ausgehende Licht, das in den Kegelstumpf 34 eingetreten ist und auf die entsprechende Grenzfläche einfällt, durch Totalreflexion zum Zentrum der optischen Einheit hin umgelenkt wird. Die jeweiligen optischen Einheiten schließen mit der ebenen Oberfläche des Moduls 30 bündig ab, sodass die Oberseite des Moduls 30 insgesamt durch eine ebene Fläche gebildet wird. Die Grenzfläche der optischen Einheiten, welche deren Lichtaustrittsfläche bildet, ist dabei eben und kann poliert ausgeführt sein. Das Modul gemäß Fig. 3 ist für eine engbündelnde Lichtstärkeverteilungskurve (LVK) vorgesehen, wobei die optische Einheit die untere Grenze der Lichtbündelung darstellt. Die von der optischen Einheit abgegebene Lichtstärkeverteilungskurve wird durch den totalreflektierenden Teil, also den Kegelstumpf 34 bestimmt. Die Oberseite der optischen Einheit kann eine Streustruktur aufweisen.

Fig. 4 zeigt zur Veranschaulichung bestimmter Aspekte der Erfindung ein weiteres optisches Modul 50, das für eine Lichtverteilung mit einer mittleren Bündelung vorgesehen ist und nicht alle Merkmale des Anspruchs 1 aufweist. Gleiche Bezugszeichen bezeichnen dabei wieder gleiche Elemente wie bei den vorangehend beschriebenen Modulen. Die der beziehungsweise den LED zugeordneten 16 optischen Einheiten 52 des Moduls 50 weisen wieder jeweils einen ersten, kegelstumpfförmigen Abschnitt 54 auf, der in gleicher Weise, bevorzugt identisch wie der kegelstumpfförmige Abschnitt 34 der Ausführungsform der Fig. 3 ausgebildet ist. Die Grenzfläche eines mit der Oberseite des Moduls abschließenden Abschnitts der optischen Einheit 52 ist mit einer Wellenstruktur 56 versehen. Bei der dargestellten Ausführungsform ist diese Wellenstruktur konzentrisch zu der LED-Normalen und der Achse des kegelstumpfförmigen Abschnitts 54 ausgebildet. Wie in Fig. 4 angedeutet, ändert sich die Größe und der Abstand der Strukturelemente in radialer Richtung, d. h. die Wellenstruktur ist in radialer Richtung nicht streng periodisch. In anderen Ausführungsformen mit einer zu der Achse des Kegelstumpfs 54 konzentrischen Wellenstruktur kann jedoch die Struktur auch in radialer Richtung periodisch ausgebildet oder in anderer Weise gleichförmig ausgebildet sein.

Während in Fig. 4 eine rotationssymmetrische Wellenstruktur gezeigt ist, kann diese Struktur auch eine andere Symmetrie, z.B. eine diskrete Rotationssymmetrie aufweisen, und insbesondere die Form eines Polygons, wie Dreieck, Quadrat, Sechseck, Achteck usw., haben. Es kann vorgesehen sein, dass diese Wellenstruktur quadratisch oder rechteckig ausgeführt ist, d.h. die Strukturelemente folgen der Form eines Quadrates oder Rechtecks. Die Umfangsform der Struktur muss im Übrigen nicht der Symmetrie der Strukturelemente entsprechen. Beispielsweise kann eine rotationssymmetrische Struktur in einer Grenzfläche der optischen Einheit 52 mit einer quadratischen Umfangsform ausgebildet sein, sodass die äußeren Elemente der Struktur nicht mehr durchgängig sind, sondern an den Begrenzungslinien des Quadrates oder Rechtecks enden. Umgekehrt kann auch vorgesehen sein, dass die Strukturelemente eine quadratische oder rechteckige Form aufweisen, und die Grenzfläche der optischen Einheit 52 einen kreisförmigen Umriss hat. Auch in diesem Fall sind die äußeren Strukturelemente der Struktur 56 nicht durchgängig, sondern enden an den Rändern des die Grenzfläche der optischen Einheit begrenzenden Kreises.

Fig. 5 zeigt zur Veranschaulichung bestimmter Aspekte der Erfindung ein weiteres optisches Modul für eine Leuchtanordnung, das insbesondere für die Sportstättenbeleuchtung geeignet ist und nicht alle Merkmale des Anspruchs 1 aufweist. Auch hier bezeichnen gleiche Bezugszeichen die gleichen Elemente wie bei den vorangehend beschriebenen optischen Modulen. Das optische Modul 60 gemäß Fig. 5 weist wieder eine 4x4-Anordnung von 16 optischen Einheiten 62 auf, welche jeweils einen lichtlenkenden Kegelstumpf 64 aufweisen, der in gleicher Weise, bevorzugt identisch wie der kegelstumpfförmige Abschnitt 34 des Ausführungsbeispiels der Fig. 3 ausgebildet ist und der einen Hohlraum aufweist, in dem die der optischen Einheit 62 zugeordnete LED bzw. Gruppe von LED angeordnet ist. Die Lichtaustrittsseite der optischen Einheiten 62 des Moduls 60 ist an ihrer Grenzfläche, welche die Lichtaustrittsfläche der optischen Einheit 62 bildet, mit der in Fig. 6 im Detail gezeigten Prismenstruktur versehen. Diese Struktur hat einen rechteckigen Umriss und weist einen zentralen Prismenbereich auf, der durch linienförmige asymmetrische Prismen 66, die parallel zueinander angeordnet sind, gebildet wird. Dieser zentrale Bereich wird vollständig von einem zweiten Bereich umgeben, der durch linienförmige symmetrische Prismen 68 gebildet wird, die ebenfalls parallel zueinander verlaufen und deren Längsrichtung senkrecht zu derjenigen der Prismenstruktur 66 verläuft.

Die symmetrische Prismenstruktur 68 spreizt die von dem totalreflektierenden Kegelstumpf 64 kollimierten Lichtstrahlen in horizontaler Richtung, d.h. in der Richtung senkrecht zur Längsrichtung der Prismen, während die Prismenstruktur 68 die Lichtstärkeverteilungskurve in der vertikalen Richtung, d.h. in Längsrichtung der Prismen, nicht oder nur wenig beeinflusst.

Der Zentralbereich mit den Prismen 66 ist um die Normale der LED und die Achse des kegelstumpfförmigen Abschnitts 64 herum angeordnet. Die Prismen 66 in diesem Bereich lenken das Licht des kegelstumpfförmigen Abschnitts 64 in die Richtung kleiner Elevationswinkel um.

Bei dieser Ausführungsform wird die Kollimation durch den totalreflektierenden kegelstumpfförmigen Abschnitt 64 genutzt. Im Sinne eines Baukastenprinzips ist es sinnvoll, die LED-Strahlung durch den kegelstumpfförmigen Abschnitt 64 zunächst maximal zu kollimieren und dann an dem an die Lichtaustrittsseite des Moduls angrenzenden Bereich der optischen Einheit 62 eine Struktur vorzusehen, welche das von dem kegelstumpfförmigen Abschnitt 64 auf sie einfallende Licht entsprechend der gewünschten Lichtstärkeverteilungskurve umlenkt. Bei diesem Aufbau ist aufgrund des kegelstumpfförmigen Abschnitts ein klar definiertes Strahlenbüschel für die nachfolgenden optischen Elemente, insbesondere die in Fig. 6 gezeigte Prismenstruktur definiert. Durch die geringe Bauhöhe und dem Abstand der LED mit bevorzugt 25 mm liefert der kegelstumpfförmige Abschnitt 64 den größten Teil der Kollimation.

In einem Querschnitt senkrecht zu ihrer Längsrichtung weisen die symmetrischen Prismen 68 an ihrer Spitze, zwischen den zueinander konvergierenden Flanken, einen Winkel in einem Bereich von 130° bis 165°, bevorzugt von 156° auf. Dies führt zu einer Aufweitung der Lichtstrahlen von 8° bis 10°, bevorzugt 9° in beide Richtungen zur LED-Normalen.

Die asymmetrischen Prismen weisen in einem Querschnitt senkrecht zu ihrer Längsrichtung an der Spitze einen äußeren Winkel zur LED-Normalen in einem Bereich von 50° bis 90°, bevorzugt von 70° auf. Dadurch werden die Lichtstrahlen in einem Bereich von 5° bis 20°, bevorzugt 12°, zur Normalen der LED gebrochen.

Die in Fig. 6 gezeigte Prismenstruktur zeichnet sich durch einen guten Cut-Off bei hohen Elevationswinkeln, einen Lichtbauch bei kleinen Elevationswinkeln, ein starkes Maximum und eine horizontale Aufspreizung aus.

Fig. 7 zeigt schematisch den Strahlengang in dem Zentralbereich mit den asymmetrischen Prismen 66 bei dem Modul der Fig. 5 und 6. Man erkennt in Fig. 7 einen Hohlraum 70, wie bereits vorangehend im Zusammenhang mit Fig. 3 beschrieben, in dem eine LED 72 untergebracht ist. Die der LED 72 gegenüberliegende Wand des Hohlraums 70, auf die Licht der LED 72 einfällt, ist zu der LED 72 hin mit einer Wölbung 74 versehen, die einen Linseneffekt erzeugt. Man erkennt in Fig. 7, dass ein von der LED 72 ausgehendes Strahlbündel an der Wölbung 74 kollimiert wird, dann in dem Modul 60 im Bereich der der LED 72 zugehörigen optischen Einheit 62 zu der Lichtaustrittsseite und der Prismenstruktur 66 läuft, wo sie in einen Bereich von 5° bis 20°, bevorzugt 12°, zu der Normalen der LED umgelenkt wird.

Fig. 8 illustriert in einer schematischen Darstellung die totalreflektierende Wirkung des kegelstumpfförmigen Abschnitts 64 und dessen Zusammenwirken mit der symmetrischen Prismenstruktur 68. Man erkennt, dass von der LED 72 ausgehendes Licht auf die Seitenwand des Hohlraums 70 einfällt, dort unter Lichtbrechung in den kegelstumpfförmigen Abschnitt 64 eintritt und sodann an dessen Seitenwand durch Totalreflexion reflektiert wird. Dieses totalreflektierte Licht fällt sodann auf die Prismenstruktur 68 ein, die dieses Licht in einen Bereich von 8° bis 10°, vorzugsweise 9°, in beide Richtungen zu der LED-Normalen umlenkt.

Ein Array von optischen Einheiten 62 mit einer Struktur wie in Fig. 6 illustriert wird bevorzugt zur Sportstättenbeleuchtungen, z.B. zur Beleuchtung eines Spielfeldes eingesetzt. Die Anordnung der Leuchten erfolgt in der Regel auf Traversen oberhalb des Spielfeldes. Die Traversen oder Gänge verlaufen parallel zur langen Kante des Spielfeldes. Die Leuchten werden dabei im Winkel von 50° bis 80° gegen die Horizontale aufgeneigt. Durch diese Ausrichtung resultiert aus der abgegebenen Lichtstärkeverteilungskurve ein schmales Oval auf dem Spielfeld, das in Verbindung mit den anderen Leuchten mit der gleichen Lichtstärkeverteilungskurve eine sehr gleichmäßige Beleuchtungsstärkeverteilung bei gleichzeitig hoher vertikaler Beleuchtung erzeugt. Der scharfe Cut-Off nach oben verhindert dabei die Blendung der gegenüber sitzenden Zuschauer.

Die erfindungsgemäße lichtlenkende Anordnung ist grundsätzlich auch für andere Lichtquellen als LED geeignet, welche eine im Wesentlichen punktförmige Lichtabstrahlcharakteristik oder anderweitig ähnliche Eigenschaften hinsichtlich der Lichtabstrahlung wie LED haben.

## Patentansprüche

1. Lichtlenkende Anordnung (10), insbesondere optisches Modul, mit einer oder mehreren optischen Einheiten (12), die jeweils einer LED oder einer Gruppe von LED zugeordnet werden können,
wobei jede dieser optischen Einheiten (12) eine Lichteintrittsseite, auf welcher von der zugeordneten LED oder Gruppe von LED abgegebenes Licht eingestrahlt werden kann, und eine Lichtaustrittsseite aufweist, an der das von der LED oder Gruppe von LED in die optische Einheit eingestrahlte Licht aus dieser austritt,
und jede dieser optischen Einheiten (12) im Lichtweg von der Lichteintrittsseite zu der Lichtaustrittsseite einen ersten lichtlenkenden Abschnitt aus einem lichtdurchlässigen Material, in dem Licht, das in dem lichtdurchlässigen Material läuft, durch Reflexion, insbesondere Totalreflexion, umgelenkt werden kann, und einen zweiten lichtlenkenden Abschnitt aus einem lichtdurchlässigen Material aufweist, welcher eine lichtlenkende Grenzfläche besitzt, welche einen Teil der Lichtaustrittseite der optischen Einheit bildet, und der als Freiformlinse (14) ausgebildet ist, die eine asymmetrische Lichtstärkeverteilung erzeugt,
wobei die lichtlenkende Anordnung (10) dafür ausgelegt ist, dass das Licht mehrheitlich in eine erste Richtung (X) und senkrecht zu dieser ersten Richtung (Y) abgegeben wird,
wobei der erste Abschnitt als Umlenkkörper (16) ausgebildet ist, der eine gekrümmte Seite aufweist, an der das in den Umlenkkörper (16) eintretende Licht der LED reflektiert werden kann, wodurch Licht, das in die Richtung der gekrümmten Seite von der bzw. den LED abgestrahlt wird, derart umgelenkt wird, daß es in die entgegengesetzte Richtung oder zu der auf der Lichtaustrittsseite der optischen Einheit gelegenen Oberseite des Umlenkkörpers (16) läuft, und der erste Abschnitt neben dem zweiten Abschnitt angeordnet ist und eine Grenzfläche besitzt, welche einen Teil der Lichtaustrittsfläche der optischen Einheit bildet, so dass die optische Einheit über den ersten und zweiten Abschnitt Licht abgeben kann, wobei die Oberseite des Umlenkkörpers (16) mit einer Prismenstruktur (18) versehen ist, welche in beide Richtungen parallel zu einer Achse (Y) senkrecht zu der ersten Richtung (X) eine breitstrahlende Lichtstärkeverteilung erzeugt.

2. Lichtlenkende Anordnung (10) nach einem der Ansprüche 1, **dadurch gekennzeichnet, dass** die gesamte lichtlenkende Anordnung (10) einstückig ausgebildet ist.

3. Lichtlenkende Anordnung (10) nach einem der Ansprüche 1 oder 2, **dadurch gekennzeichnet, dass** die besagte Grenzfläche des zweiten Abschnitts eine Freiformfläche aufweist oder aus einer solchen besteht.

4. Lichtlenkende Anordnung (10) nach einem der Ansprüche 1 bis 3, **dadurch gekennzeichnet, dass** die lichtlenkende Anordnung (10) mehrere optische Einheiten (12) aufweist, wobei der erste lichtlenkende Abschnitt und/oder der zweite lichtlenkende Abschnitt mehrerer dieser optischen Einheiten (12) identisch ausgebildet ist.

5. Leuchtanordnung, insbesondere Leuchtmodul, mit einer oder mehreren LED und mit einer lichtlenkenden Anordnung (10) mit einer oder mehreren optischen Einheiten (12) nach einem der Ansprüche 1 bis 4, die jeweils einer LED oder einer Gruppe von LED zugeordnet sind.

6. Leuchtanordnung nach Anspruch 5, **dadurch gekennzeichnet, dass** das durch den zweiten Abschnitt hindurchtretende Licht in dem zweiten lichtlenkenden Abschnitt nicht reflektiert wird.

7. Leuchte mit einer oder mehreren Leuchtanordnungen nach einem der Ansprüche 5 oder 6.

8. Formwerkzeug zur Herstellung einer lichtlenkenden Anordnung (10) nach einem der Ansprüche 1 bis 4 bzw. einer lichtlenkenden Anordnung (10) zur Verwendung in einer Leuchtanordnung nach einem der Ansprüche 5 oder 6 in einem Formvorgang, **dadurch gekennzeichnet, dass** das Formwerkzeug ein erstes Teil aufweist, mit dem die ersten Abschnitte eines oder mehrerer der besagten optischen Einheiten (12) geformt werden, und ein zweites Teil aufweist, mit dem besagte Grenzfläche der zweiten Abschnitte eines oder mehrerer der besagten optischen Einheiten (12) geformt wird.

9. Verfahren zur Herstellung verschiedener lichtlenkender Anordnungen (10) nach einem der Ansprüche 1 bis 4 bzw. zur Verwendung in einer Leuchtanordnung nach einem der Ansprüche 5 oder 6 mittels Formwerkzeugen nach Anspruch 8, wobei für die Herstellung jeder Anordnung jeweils dasselbe erste Formteil verwendet wird, welches die ersten Abschnitte eines oder mehrerer der besagten optischen Einheiten (12) definiert, und ein jeweils für die jeweilige Anordnung spezifisches zweites Formteil verwendet wird, welches die besagte Grenzfläche der zweiten Abschnitte eines oder mehrerer der besagten optischen Einheiten (12) definiert.

## Claims

1. Light-guiding arrangement (10), more particularly an optical module, having one or more optical units (12) which can each be assigned to an LED or a group of LEDs,
wherein each of these optical units (12) has a light-entrance side, on which light emitted by the assigned LED or group of LEDs can be radiated in, and a light-exit side, on which the light radiated into the optical unit from the LED or group of LEDs emerges from said optical unit,
and each of these optical units (12) comprises, in the light path from the light-entrance side to the light-exit side, a first light-guiding section made of a light-transmissive material in which light that runs within the light-transmissive material can be deflected by reflection, in particular total-internal reflection, and a second light-guiding section made of a light-transmissive material which has a light-deflecting interface which forms part of the light-exit side of the optical unit and which is in the form of a free-form lens (14) that produces an asymmetric light intensity distribution, wherein the light-guiding arrangement (10) is designed so that the light is predominantly emitted in a first direction (X) and perpendicular to this first direction (Y),
wherein the first section is in the form of a deflection body (16) which has a curved side on which the light of the LED entering the deflection body (16) can be reflected, as a result of which light emitted by the LED or LEDs in the direction of the curved side is deflected in such a way that it runs in the opposite direction or runs to the upper side of the deflection body (16) situated on the light-exit side of the optical unit, and the first section is arranged next to the second section and comprises an interface which forms part of the light-exit surface of the optical unit such that the optical unit can emit light via the first and second sections, wherein the upper side of the deflection body (16) is provided with a prism structure (18) which produces a wide-angle light intensity distribution in both directions parallel to an axis (Y) perpendicular to the first direction (X).

2. Light-guiding arrangement (10) according to Claim 1, **characterized in that** the entire light-guiding arrangement (10) is formed in one piece.

3. Light-guiding arrangement (10) according to either of Claims 1 and 2, **characterized in that** the aforementioned interface of the second section has a free-form surface or consists of the latter.

4. Light-guiding arrangement (10) according to any one of Claims 1 to 3, **characterized in that** the light-guiding arrangement (10) comprises a plurality of optical units (12), wherein the first light-guiding section and/or the second light-guiding section of a plurality of these optical units (12) has an identical form.

5. Lighting arrangement, in particular a lighting module, comprising one or more LEDs and comprising a light-guiding arrangement (10) having one or more optical units (12) according to any one of Claims 1 to 4, which are each assigned to an LED or a group of LEDs.

6. Lighting arrangement according to Claim 5, **characterized in that** the light passing through the second section is not reflected within the second light-guiding section.

7. Luminaire comprising one or more lighting arrangements according to either of Claims 5 and 6.

8. Mould for producing a light-guiding arrangement (10) according to any one of Claims 1 to 4 or a light-guiding arrangement (10) for use in a lighting arrangement according to either of Claims 5 and 6 in a moulding operation, **characterized in that** the mould comprises a first part used to mould the first sections of one or more of the aforementioned optical units (12) and a second part used to mould the aforementioned interface of the second sections of one or more of the aforementioned optical units (12) .

9. Method for producing various light-guiding arrangements (10) according to any one of Claims 1 to 4 or for use in a lighting arrangement according to either of Claims 5 and 6 using moulds according to Claim 8, wherein the same first moulded part which defines the first sections of one or more of the aforementioned optical units (12) is used every time in the production of each arrangement and a second moulded part specific to the respective arrangement is used in each case, said second moulded part defining the aforementioned interface of the second sections of one or more of the aforementioned optical units (12).

## Revendications

1. Ensemble (10) guidant la lumière, en particulier module optique, avec une ou plusieurs unités (12) optiques qui peuvent être respectivement affectées à une LED ou à un groupe de LED,
chacune de ces unités (12) optiques comportant un côté d'entrée de lumière sur lequel la lumière délivrée par la LED ou le groupe de LED affecté(e) peut être projetée, et un côté de sortie de lumière au niveau duquel la lumière projetée par la LED ou le groupe de LED dans l'unité optique sort de celle-ci,
et chacune de ces unités (12) optiques comportant, sur le chemin de lumière à partir du côté d'entrée de lumière vers le côté de sortie de lumière, un premier tronçon guidant la lumière en matériau translucide dans lequel la lumière qui se déplace dans le matériau translucide peut être déviée par réflexion, en particulier par réflexion totale, et un deuxième tronçon guidant la lumière, en matériau translucide, qui possède une interface guidant la lumière qui forme une partie du côté de sortie de lumière de l'unité optique et qui est constitué en tant que lentille de forme libre (14) qui produit une répartition asymétrique de l'intensité lumineuse,
l'ensemble (10) guidant la lumière étant conçu pour que la lumière soit majoritairement délivrée dans une première direction (X) et perpendiculairement à cette première direction (Y),
le premier tronçon étant constitué en tant que corps déflecteur (16) qui comporte un côté courbé sur lequel la lumière de la LED entrant dans le corps déflecteur (16) est réfléchie, ce qui fait que la lumière qui est émise dans la direction du côté courbé par la ou respectivement les LED est déviée de telle sorte qu'elle se déplace dans la direction opposée ou vers le côté supérieur du corps déflecteur (16) placé sur le côté de sortie de lumière de l'unité optique, et le premier tronçon étant disposé près du deuxième tronçon et possédant une interface qui forme une partie de la surface de sortie de lumière de l'unité optique de sorte que l'unité optique peut délivrer de la lumière par le biais du premier tronçon et du deuxième tronçon, le côté supérieur du corps déflecteur (16) étant muni d'une structure prismatique (18) qui produit une répartition à faisceau large de l'intensité lumineuse dans les deux directions parallèlement à un axe (Y) perpendiculairement à la première direction (X).

2. Ensemble (10) guidant la lumière selon l'une des revendications 1, **caractérisé en ce que** la totalité de l'ensemble (10) guidant la lumière est constitué d'une seule pièce.

3. Ensemble (10) guidant la lumière selon l'une des revendications 1 ou 2, **caractérisé en ce que** ladite interface du deuxième tronçon comporte une surface de forme libre ou est constituée d'une telle surface.

4. Ensemble (10) guidant la lumière selon l'une des revendications 1 à 3, **caractérisé en ce que** l'ensemble (10) guidant la lumière comporte plusieurs unités (12) optiques, le premier tronçon guidant la lumière et/ou le deuxième tronçon guidant la lumière de plusieurs de ces unités (12) optiques étant constitué de façon identique.

5. Ensemble d'éclairage, en particulier module d'éclairage, avec une ou plusieurs LED et avec un ensemble (10) guidant la lumière avec une ou plusieurs unités (12) optiques selon l'une des revendications 1 à 4 qui sont respectivement affectées à une LED ou à un groupe de LED.

6. Ensemble d'éclairage selon la revendication 5, **caractérisé en ce que** la lumière traversant le deuxième tronçon n'est pas réfléchie dans le deuxième tronçon guidant la lumière.

7. Luminaire avec un ou plusieurs ensembles d'éclairage selon l'une des revendications 5 ou 6.

8. Outil de formage destiné à la fabrication d'un ensemble (10) guidant la lumière selon l'une des revendications 1 à 4 ou respectivement d'un ensemble (10) guidant la lumière destiné à être utilisé dans un ensemble d'éclairage selon l'une des revendications 5 ou 6 dans un processus de formage, **caractérisé en ce que** l'outil de formage comporte une première partie avec laquelle les premiers tronçons d'une ou de plusieurs desdites unités (12) optiques sont formés, et comporte une deuxième partie avec laquelle ladite interface des deuxièmes tronçons d'une ou de plusieurs desdites unités (12) optiques est formée.

9. Procédé de fabrication de différents ensembles (10) guidant la lumière selon l'une des revendications 1 à 4 ou respectivement pour l'utilisation dans un ensemble d'éclairage selon l'une des revendications 5 ou 6 au moyen d'outils de formage selon la revendication 8, dans lequel, pour la fabrication de chaque ensemble, il est utilisé respectivement la même première partie de formage qui définit les premiers tronçons d'une ou de plusieurs desdites unités (12) optiques, et il est utilisé une deuxième partie de formage respectivement spécifique pour l'ensemble respectif qui définit ladite interface des deuxièmes tronçons d'une ou de plusieurs desdites unités (12) optiques.
